# EUROPEAN PATENT SPECIFICATION

(11) **EP 2 012 159 B1**
(45) Date of publication and mention of the grant of the patent: **15.09.2010**
(21) Application number: 07111673.5
(22) Date of filing: 03.07.2007
(51) Int. Cl.: G02B 7/02

(54) **Protecting structure for movable mechanism in a miniature lens**
Schutzstruktur für einen beweglichen Mechanismus in einer Miniaturlinse
Structure de protection pour mécanisme mobile dans une lentille miniature

(43) Date of publication of application: 07.01.2009
(73) Proprietor: TDK TAIWAN CORP., Taipei (TW)
(72) Inventor: Wang, Hung-Lin, Yangmei Taoyuan (TW)
(74) Representative: Viering, Jentschura & Partner

(56) References cited:
- WO-A-2007/069844
- TW-U- M 300 309
- US-B1- 6 266 486

## Description

### FIELD OF THE INVENTION

The present invention relates to a protecting structure for movable mechanism in a miniature lens, and more particularly to a structure for protecting elastic members in a miniature lens focusing driving mechanism against deformation.

### BACKGROUND OF THE INVENTION

With the advancement in scientific technologies and the modularization and miniaturization of camera lens, it is now possible to produce digital cameras having a very small volume, and most of currently available mobile phones are provided with the function of a digital camera. In a miniature lens, there are many different auto-focusing driving mechanisms. Among others, voice coil motor (VCM) is the currently most widely adopted auto-focusing driving mechanism. The VCM has the advantages of small volume, low power consumption, accurately actuated displacement, and cost-effective, and is therefore very suitable for short-distance driving in miniature lens auto-focusing.

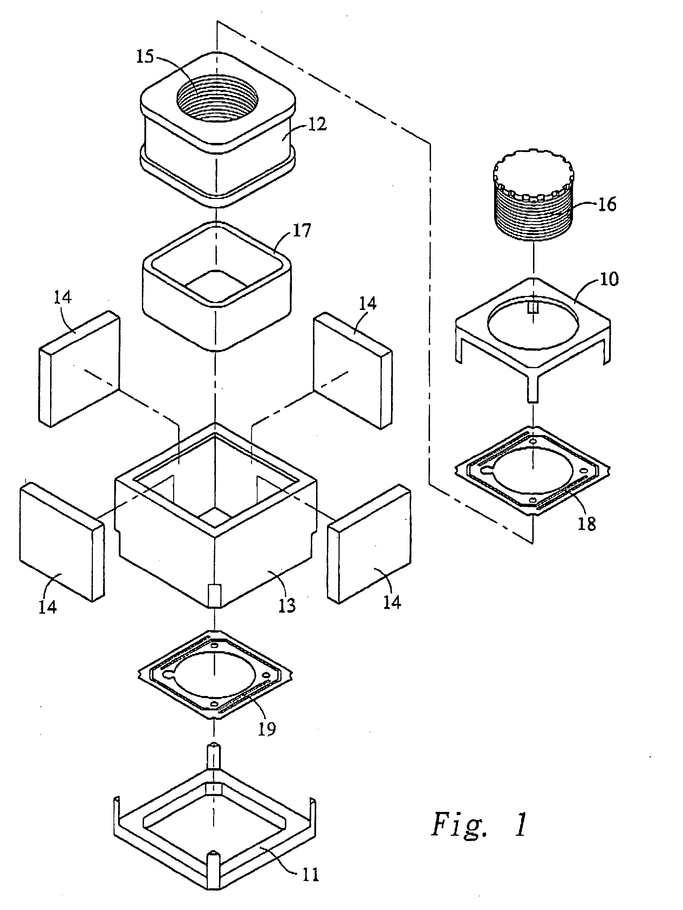

Fig. 1 is an exploded perspective view showing that a conventional movable lens focusing mechanism includes an upper cover 10, a lower cover 11, a lens holder 12, and a an outer frame 13 being provided at four inner wall surfaces with a magnet 14 each. The lens holder 12 is internally provided with screw threads 15 for a lens 16 to screw thereinto. A winding 17 is wound around the lens holder 12. The lens holder 12 is supported by an upper plate spring 18 and a lower plate spring 19 to be axially movably located at a center in the outer frame 13 and surrounded by the four magnets 14. When the winding 17 is supplied with an amount of electric current to thereby produce a magnetic field polarity, the lens holder 12 and the four magnets 14 mutually repulse or attract, bringing the lens holder 12 and accordingly, the lens 16 to displace for focusing.

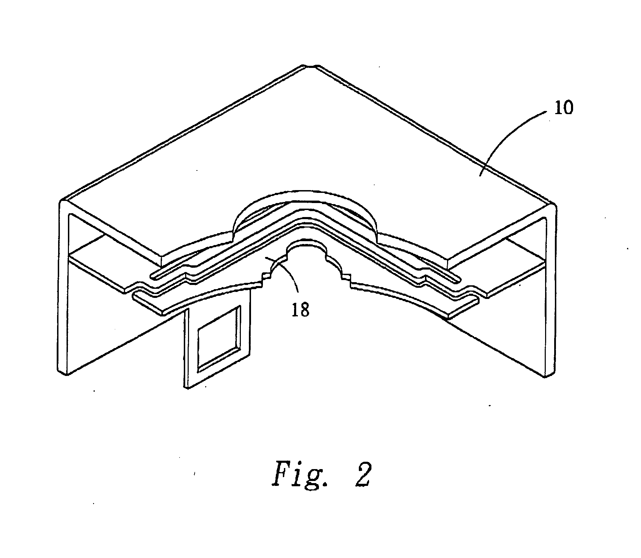

When the lens 16 is being screwed into the lens holder 12, a torsion force is produced and applied to the lens holder 12. Since the upper and the lower plate spring 18, 19 connected to and supporting the lens holder 12 have a relatively small thickness, which is generally as small as 0.06cm, and include relatively thin elastic bendable portions, as shown in Fig. 2, the two plate springs 18, 19 tend to deform or even break due to the torsion force produced at the time the lens 16 is screwed into the lens holder 12.

To enable a movable lens focusing mechanism with low power consumption and quick displacement, the elastic members for supporting the lens holder 12 have been designed to be elastically movable in an axial direction without any elastic protection in lateral directions. Under this condition, a lens just could not afford to fall because a big impact due to falling would cause the lens to displace laterally and result in damage of the elastic members. That is, the lens would become damaged or useless due to lack of elastic protection in the lateral directions.

It is therefore tried by the inventor to develop a structure for protecting the elastic members in the miniature lens against deformation.

WO-A1-2007/069844 and TW-300309-Y disclose a protecting structure for movable mechanism in a miniature lens, the protecting structure being mounted in a housing of a focusing mechanism of the miniature lens and comprising: an upper cover defining a central opening and fixed in the housing of the miniature lens focusing mechanism; a lens holder for holding a lens therein; at least one elastic member connecting the lens holder to the upper cover, such that the lens holder is supported by the at least one elastic member to suspend in the housing to be axially displaceable forward and rearward for the purpose of focusing; and at least one protective member being received in the central opening of the upper cover to locate outside the elastic member relative to the lens holder for restricting the lens holder from moving laterally, and limiting a torsion force produced at the time of screwing the lens into the lens holder, so as to protect the elastic member against deformation due to the torsion force.

### SUMMARY OF THE INVENTION

A primary object of the present invention is to provide a protecting structure for movable mechanism in a miniature lens, so that elastic members in a movable miniature lens focusing mechanism are protected against deformation.

According to the present invention, a protecting structure as claimed in claim 1 is provided. The subclaims show some examples for such a protecting structure.

To achieve the above and other objects, the protecting structure for movable mechanism in a miniature lens according to the present invention is mounted in a housing of a miniature lens focusing mechanism, and includes an upper cover, a lens holder, at least one elastic member, and at least one protective member. The lens holder is configured to hold a lens therein. The at least one elastic member connects the lens holder to the upper cover, so that the lens holder is supported by the elastic member to suspend in the housing and is axially displaceable forward or rearward for focusing. The protective member is located outside the elastic member relative to the lens holder and received in a central opening of the upper cover for restricting the lens holder from displacing laterally, and limiting the torsion force produced at the time of screwing the lens into the lens holder, so as to protect the elastic member against deformation.

In the present invention, the upper cover is provided with at least one notch, and the protective member is provided with at least one tongue corresponding to the notch on the upper cover. The protective member is received in the central opening of the upper cover with the at least one tongue engaged with the at least one notch, so as to limit an extent within which the elastic member can be turned or horizontally moved.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is an exploded perspective view of a conventional movable lens focusing mechanism;

Fig. 2 is a fragmentary cutaway view of the lens focusing mechanism of Fig. 1 in an assembled state;

Fig. 3 is an exploded perspective view of a protecting structure for movable mechanism in a miniature lens according to the present invention;

Fig. 4 is an assembled perspective view of the present invention with a lens and an upper case omitted therefrom; and

Fig. 5 is a cutaway view showing the position of a protective member relative to an upper cover and an elastic member included in the present invention.

### DETAILED DESCRIPTION OF THE INVENTION

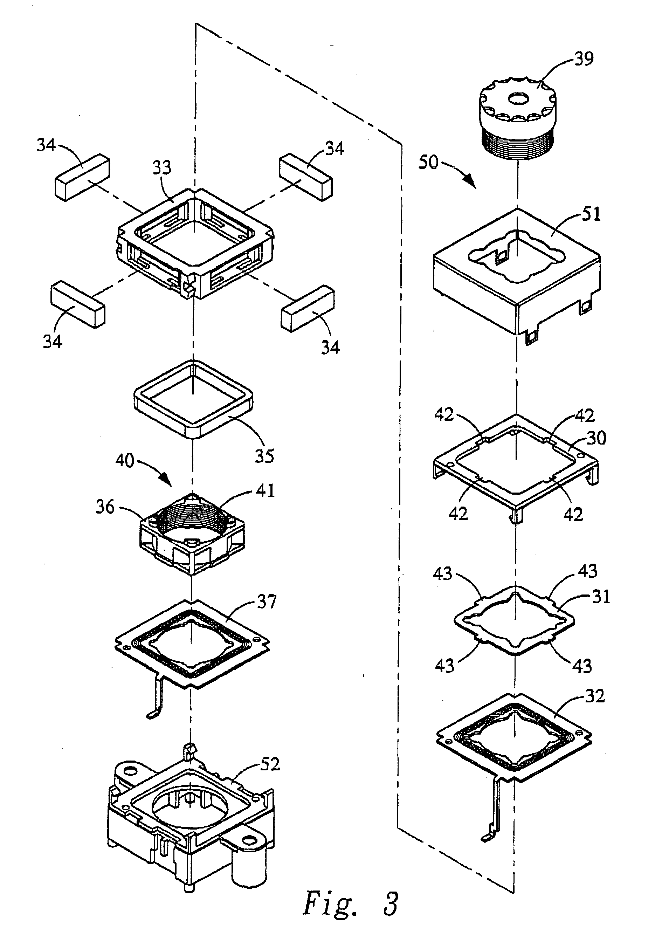

Please refer to Fig. 3 that is an exploded perspective view of a protecting structure for movable mechanism in a miniature lens according to the present invention mounted in a housing 50 of a focusing mechanism of the miniature lens. The housing 50 consists of an upper case 51 and a base 52, and the present invention is received in the upper case 51. As shown, the protecting structure of the present invention includes an upper cover 30, a protective member 31 a first elastic member 32, a frame 33, a plurality of magnetic elements 34, a winding 35, a lens holder 36, and a second elastic member 37. The lens holder 36 is a hollow ring member defining a through hole 40, on a peripheral wall thereof screw threads 41 are provided, so that a lens 39 may be correspondingly screwed into the lens holder 36.

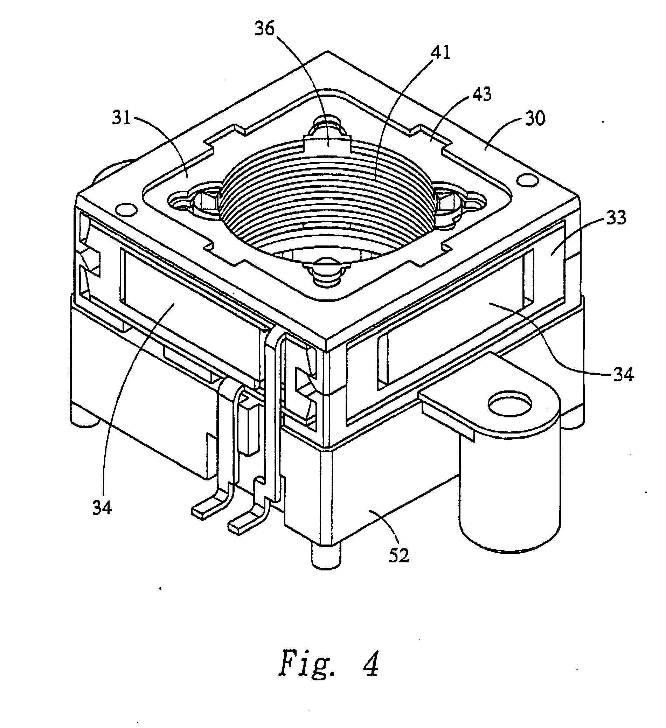

Fig. 4 is an assembled perspective view of Fig. 3 with the lens 39 and the upper case 51 omitted therefrom. As shown, the upper cover 30 defines a central opening, along a peripheral edge of which at least one notch 42 is provided. The first elastic member 32 and the second elastic member 37 also have a central opening each, and are used to support the lens holder 36 in a suspended state. More specifically, the lens holder 36 is connected to the upper case 30 via the first elastic member 32, and to the base 52 via the second elastic member 37.

The winding 35 is wound around the lens holder 36. The frame 33 is located around the winding 35. The magnetic elements 34 are permanent magnets fixed to a wall of the frame 33. When an amount of electric current is supplied to the winding 35 to produce a magnetic field polarity, the lens holder 36 and the magnetic elements 34 mutually repulse or attract, bringing the lens holder 36 and accordingly, the lens 39 to axially displace forward or rearward for focusing. With the first and the second elastic member 32, 37, the lens holder 36 supported thereon is allowed to elastically rct to an original position in the frame 33. The base 52 is a hollow structure having an inner contour corresponding to an outer contour of the lens holder 36, so that the lens holder 36 could be received in the base 52.

The protective member 31 has a central opening and is made of a rigid material, such as a metal sheet or a plastic sheet. The protective member 31 is located on or around the first elastic member 32, and received in the central opening of the upper cover 30 with a clearance as small as 0.12cm left between the protective member 31 and the upper cover 30. The protective member 31 is provided along its peripheral edge with at least one tongue 43 corresponding to the at least one notch 42 on the upper cover 30. The protective member 31 is fixed to the upper cover 30 through engagement of the at least one tongue 43 with the at least one notch 42, so as to limit the elastic members 32, 37 to turn or laterally displace only within the range of 0.12cm.

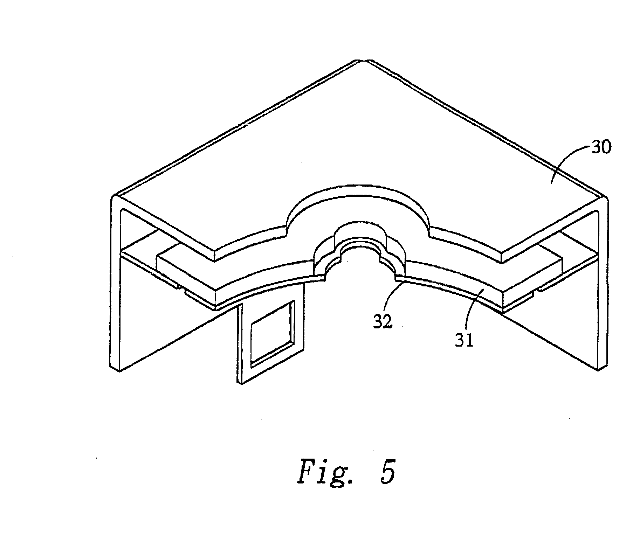

Fig. 5 is a cutaway view showing the position of the protective member 31. relative to the upper cover 30 and the first elastic member 32. To mount the lens 39 in the lens holder 36, the lens 39 must be turned to screw into the through hole 40 defined in the lens holder 36. At this point, a torsion force is produced and applied to the upper and the lower elastic members 32, 37 with which the lens holder 36 is supported. However, since the protective member 31 is associated with the upper cover 30 through engagement of the at least one tongue 43 with the at least one notch 42, an extent by which the protective member 31 can be turned is limited. Moreover, since the protective member 31 has only limited range of turning, it further limits the torsion force of the elastic member 32, protecting the elastic member 32 against deformation due to the torsion force produced at the time of screwing the lens 39 into the lens holder 36.

With the above arrangements, the protective member 31 can only axially move forward and rearward while its lateral movement is limited due to the engaged tongues 43 and notches 42. Moreover, the protective member 31 may have a thickness up to 0.25cm, and this thickness is high enough for the protective member 31 to absorb an impact caused by a fallen camera. Therefore, the protective member 31 functions to limit the lateral displacement and accordingly, the deformation of the first elastic member 32 possibly caused by a big impact from a fallen camera, and further protect the lens 39 against adverse influences by the impact.

In brief, in the protecting structure for movable mechanism in a miniature lens according to the present invention, the protective member 31 is provided on or around the first elastic member 32 to limit both the torsion force and the lateral movement of the lens 39, so that the first elastic member 32 is effectively protected against deformation.

The present invention has been described with a preferred embodiment thereof and it is understood that many changes and modifications in the described embodiment can be carried out without departing from the scope of the invention that is intended to be limited only by the appended claims.

## Claims

1. A protecting structure for movable mechanism in a miniature lens, the protecting structure being mounted in a housing (50) comprising an upper case (51) and a base (52) of a focusing mechanism of the miniature lens and comprising:
an upper cover (30) defining a central opening and fixed in the housing (50) of the miniature lens focusing mechanism;
a lens holder (36) for holding a lens (39) therein;
at least one elastic member (32,37) connecting the lens holder (36) to the upper cover (30), such that the lens holder (36) is supported by the at least one elastic member (32,37) to suspend in the housing (50) to be axially displaceable forward and rearward for the purpose of focusing; and
at least one protective member (31) being received in the central opening of the upper cover (30) to locate outside the elastic member (32) relative to the lens holder (36) for restricting the lens holder (36) from moving laterally, and limiting a torsion force produced at the time of screwing the lens (39) into the lens holder (36), so as to protect the elastic member (32) against deformation due to the torsion force;
the protecting structure
**characterized in that**
the upper cover (30) is provided along the central opening with at least one notch (42), and the protective member (31) is provided along an outer peripheral edge with at least one tongue (43) corresponding to the at least one notch (42) on the upper cover (30), so that the protective member (31) is fixedly received in the central opening of the upper cover (30) through engagement of the at least one tongue (43) with the at least one notch (42) to limit an extent within which the elastic member (32) can be turned or laterally moved.

2. The structure for protecting movable mechanism in a miniature lens as claimed in claim 1, further comprising a winding (35) and a frame (33) in the housing (50); the winding (35) enclosing the lens holder (36), and the frame (33) enclosing the winding (35) and having a plurality of magnetic elements (34) fixed to a peripheral wall of the frame (33); whereby when an amount of electric current is supplied to the winding (35) to produce a magnetic field, the lens holder (36) and the lens (39) screwed thereto are caused to axially displace forward and rearward in the frame (33) to achieve the purpose of focusing.

3. The structure for protecting movable mechanism in a miniature lens as claimed in claim 1, wherein the protective member (31) has a thickness of 0.25 cm.

4. The structure for protecting movable mechanism in a miniature lens as claimed in claim 1, wherein the protective member (31) is made of metal sheet or plastic sheet.

## Patentansprüche

1. Eine Schutzstruktur für einen bewegbaren Mechanismus bei einem Miniaturobjektiv, wobei die Schutzstruktur in einem einen oberen Kasten (51) und eine Basis (52) aufweisenden Gehäuse (50) eines Fokussierungsmechanismus des Miniaturobjektivs montiert ist und aufweist:
eine obere Abdeckung (30), die eine zentrale Öffnung definiert und in dem Gehäuse (50) des Miniaturobjektiv-Fokussierungsmechanismus befestigt ist,
eine Objektivhalterung (36), um darin ein Objektiv (39) zu halten,
mindestens ein elastisches Element (32, 37), das die Objektivhalterung (36) mit der oberen Abdeckung (30) verbindet, so dass die Objektivhalterung (36) von dem mindestens einen elastischen Element (32, 37) abgestützt wird, um in dem Gehäuse (50) zu hängen, um zum Zweck des Fokussierens axial nach vorne und nach hinten verschiebbar zu sein, und
mindestens ein Schutzelement (31), das in der zentralen Öffnung der oberen Abdeckung (30) aufgenommen ist, um relativ zu der Objektivhalterung (36) außerhalb des elastischen Elements (32) positioniert zu sein, um die Objektivhalterung (36) daran zu hindern, sich seitlich zu bewegen, und das eine Torsionskraft begrenzt, die zu dem Zeitpunkt des Schraubens des Objektivs (39) in die Objektivhalterung (36) erzeugt wird, um das elastische Element (32) vor einer Verformung aufgrund der Torsionskraft zu schützen,
wobei die Schutzstruktur
**dadurch gekennzeichnet ist, dass**
die obere Abdeckung (30) entlang der zentralen Öffnung mit mindestens einer Aussparung (42) versehen ist und das Schutzelement (31) entlang einem Außenumfangsrand mit mindestens einer Zunge (43) versehen ist, die mit der mindestens einen Aussparung (42) an der oberen Abdeckung (30) korrespondiert, so dass das Schutzelement (31) durch einen Eingriff der mindestens einen Zunge (43) mit der mindestens einen Aussparung (42) fest in der zentralen Öffnung der oberen Abdeckung aufgenommen ist, um ein Ausmaß, in dem das elastische Element (32) gedreht oder seitlich bewegt werden kann, zu begrenzen.

2. Die Struktur zum Schützen eines bewegbaren Mechanismus bei einem Miniaturobjektiv gemäß Anspruch 1, ferner eine Wicklung (35) und einen Rahmen (33) in dem Gehäuse (50) aufweisend, wobei die Wicklung (35) die Objektivhalterung (36) umschließt und der Rahmen (33) die Wicklung (35) umschließt und eine Mehrzahl von Magnetelementen (34) aufweist, die an einer Umfangswand des Rahmens (33) befestigt sind, wodurch, wenn eine Menge an elektrischem Strom auf die Wicklung (35) aufgebracht wird, um ein Magnetfeld zu erzeugen, bewirkt wird, dass sich die Objektivhalterung (36) und das daran geschraubte Objektiv (39) in dem Rahmen (33) axial nach vorne und nach hinten bewegen, um den Zweck des Fokussierens zu erfüllen.

3. Die Struktur zum Schützen eines bewegbaren Mechanismus bei einem Miniaturobjektiv gemäß Anspruch 1, wobei das Schutzelement (31) eine Dicke von 0,25 cm aufweist.

4. Die Struktur zum Schützen eines bewegbaren Mechanismus bei einem Miniaturobjektiv gemäß Anspruch 1, wobei das Schutzelement (31) aus einem Metallblatt oder einem Kunststoffblatt hergestellt ist.

## Revendications

1. Structure de protection pour mécanisme mobile dans une lentille miniature, la structure de protection étant montée dans un boîtier (50) comprenant un carter supérieur (51) et une base (52) d'un mécanisme de focalisation de la lentille miniature et comprenant :
un couvercle supérieur (30) définissant une ouverture centrale et étant fixé dans le boîtier (50) du mécanisme de focalisation de lentille miniature ;
un support de lentille (36) pour maintenir une lentille (39) à l'intérieur ;
au moins un élément élastique (32, 37) reliant le support de lentille (36) au couvercle supérieur (30), de sorte que le support de lentille (36) soit supporté par l'au moins un l'élément élastique (32, 37) pour être suspendu dans le boîtier (50) de manière à être déplaçable de manière axiale vers l'avant et vers l'arrière dans le but d'une focalisation ; et
au moins un élément de protection (31) reçu dans l'ouverture centrale du couvercle supérieur (30) pour positionner à l'extérieur l'élément élastique (32) par rapport au support de lentille (36) pour empêcher le support de lentille (36) de se déplacer latéralement, et limiter une force de torsion produite au moment du vissage de la lentille (39) dans le support de lentille (36), de manière à protéger l'élément élastique (32) contre une déformation due à la force de torsion ;
la structure de protection étant **caractérisée en ce que** le couvercle supérieur (30) est muni le long de l'orifice l'ouverture centrale d'au moins une encoche (42), et l'élément de protection (31) est muni le long d'un bord périphérique extérieur d'au moins une languette (43) correspondant à l'au moins une encoche (42) sur le couvercle supérieur (30), de sorte que l'élément de protection (31) est reçu de manière fixe dans l'ouverture centrale du couvercle supérieur (30) par engrènement de l'au moins une languette (43) avec l'au moins une encoche (42) pour limiter un espace dans lequel l'élément élastique (32) peut tourner ou se déplacer latéralement.

2. Structure de protection pour mécanisme mobile dans une lentille miniature selon la revendication 1, comprenant en outre une armature (35) et un châssis (33) dans le boîtier (50) ; l'armature (35) renfermant le support de lentille (36), et le châssis (33) renfermant l'armature (35) et ayant une pluralité d'éléments magnétiques (34) fixés à une paroi périphérique du châssis (33) ; grâce à quoi quand une quantité de courant électrique est fournie à l'armature (35) pour produire un champ magnétique, le support de lentille (36) et la lentille (39) vissée à celui-ci sont amenés à se déplacer axialement vers l'avant et vers l'arrière dans le châssis (33) afin d'atteindre le but d'une focalisation.

3. Structure de protection pour mécanisme mobile dans une lentille miniature selon la revendication 1, où l'élément de protection (31) possède une épaisseur de 0,25 cm.

4. Structure de protection pour mécanisme mobile dans une lentille miniature selon la revendication 1, où l'élément de protection (31) est fait d'une feuille de métal ou d'une feuille de plastique.
